# EUROPEAN PATENT SPECIFICATION

(11) **EP 2 489 698 B1**
(45) Date of publication and mention of the grant of the patent: **02.07.2014**
(21) Application number: 12155088.3
(22) Date of filing: 13.02.2012
(51) Int. Cl.: C08L 15/00, C08L 19/00

(54) **Rubber composition and pneumatic tire**
Kautschukzusammensetzung und Luftreifen
Composition de caoutchouc et pneu

(30) Priority: 15.02.2011 US 201113027300
(43) Date of publication of application: 22.08.2012
(73) Proprietor: The Goodyear Tire & Rubber Company, Akron, OH 44316-0001 (US)
(72) Inventor: Kanz, Carlo, L-8249 Mamer (LU); Kaes, Christian, L-9184 Schrondweiler (LU); Pagliarini, Olivio Jean-Baptiste, L-6212 Consdorf (LU); Weydert, Marc, L-8020 Strassen (LU); Frank, Uwe Ernst, D-54329 Konz (DE)
(74) Representative: Kutsch, Bernd

(56) References cited:
- US-A1- 2010 186 868

## Description

### Background of the Invention

It is highly desirable for tires to have good wet skid resistance, low rolling resistance, and good wear characteristics. It has traditionally been very difficult to improve a tire's wear characteristics without sacrificing its wet skid resistance and traction characteristics. These properties depend, to a great extent, on the dynamic viscoelastic properties of the rubbers utilized in making the tire.

In order to reduce the rolling resistance and to improve the treadwear characteristics of tires, rubbers having a high rebound have traditionally been utilized in making tire tread rubber compounds. On the other hand, in order to increase the wet skid resistance of a tire, rubbers which undergo a large energy loss have generally been utilized in the tire's tread. In order to balance these two viscoelastically inconsistent properties, mixtures of various types of synthetic and natural rubber are normally utilized in tire treads. For instance, various mixtures of styrene-butadiene rubber and polybutadiene rubber are commonly used as a rubbery material for automobile tire treads.

### Summary of the Invention

The invention is directed to a rubber composition in accordance with claim 1 and to a pneumatic tire in accordance with claim 15.

Dependent claims refer to preferred embodiments of the invention.

In one preferred aspect of the invention, the rubber composition is used in a tread compound of a pneumatic tire. Preferably, the tread compound is a tread cap compound.

### Description of the Invention

There is disclosed a pneumatic tire having a tread comprising a vulcanizable rubber composition comprising, expressed as parts by weight per 100 parts by weight of elastomer (phr),
(A) 10 to 40 phr of a polybutadiene rubber having a microstructure comprising 96 to 98 percent cis 1,4-isomeric units, 1 to 3 percent trans 1,4-isomeric units and 0.3 to 1 percent vinyl 1,2-content; preferably a number average molecular weight (Mn) in a range of from 230,000 to 250,000 with a heterogeneity index (Mw/Mn) preferably in a range of from 1.5/1 to 2/1, and a Tg preferably in a range of from -104 to -109°C;
(B) 60 to 90 phr of a solution polymerized styrene-butadiene rubber functionalized with an alkoxysilane group and a primary amine group, and is represented by the formula (1) or (2) 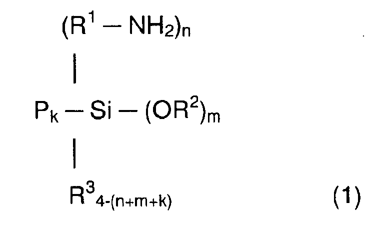 wherein P is a (co)polymer chain of a conjugated diolefin or a conjugated diolefin and an aromatic vinyl compound, R¹ is an alkylene group having 1 to 12 carbon atoms, R² and R³ are each independently an alkyl group having 1 to 20 carbon atoms, an allyl group or an aryl group, n is an integer of 1 or 2, m is an integer of 1 or 2, and k is an integer of 1 or 2, with the proviso that n+m+k is an integer of 3 or 4, 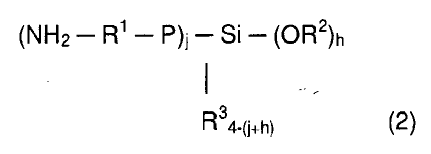 wherein P, R¹, R² and R³ have the same definitions as give for the above-mentioned formula (1), j is an integer of 1 to 3, and h is an integer of 1 to 3, with the provision that j+h is an integer of 2 to 4;
(C) 60 to 100 phr of silica having a CTAB specific surface area (S_{CTAB}) of between 40 and 525 m²/g, a BET specific surface area (S_{BET}) of between 45 and 550 m²/g; and
(D) no more than 2 phr of carbon black.

The phrase "rubber or elastomer containing olefinic unsaturation" is intended to include both natural rubber and its various raw and reclaim forms as well as various synthetic rubbers. In the description of this invention, the terms "rubber" and "elastomer" may be used interchangeably, unless otherwise prescribed. The terms "rubber composition," "compounded rubber" and "rubber compound" are used interchangeably to refer to rubber which has been blended or mixed with various ingredients and materials, and such terms are well known to those having skill in the rubber mixing or rubber compounding art.

One component of the rubber composition is from 10 to 40 phr of a polybutadiene rubber having a microstructure comprising 96 to 98 percent cis 1,4-isomeric units, 1 to 3 percent trans 1,4-isomeric units and 0.3 to 1 percent vinyl 1,2-content; a number average molecular weight (Mn) in a range of from 230,000 to 250,000 with a heterogeneity index (Mw/Mn) in a range of from 1.5/1 to 2/1, and a Tg in a range of from -104 to -109°C. Suitable polybutadiene is available commercially as Buna CB25® from Lanxess.

A second component of the rubber composition is from 60 to 90 phr of a solution polymerized styrene-butadiene rubber functionalized with an alkoxysilane group a primary amine.

In one embodiment, the styrene-butadiene rubber is obtained by copolymerizing styrene and butadiene, and characterized in that the styrene-butadiene rubber has a primary amino group and an alkoxysilyl group which are bonded to the polymer chain. In one embodiment, the alkoxysilyl group may be at least one of methoxysilyl group and ethoxysilyl group.

The primary amino group may be bonded to any of a polymerization initiating terminal, a polymerization terminating terminal, a main chain of the styrene-butadiene rubber and a side chain, as long as it is bonded to the styrene-butadiene rubber chain. However, the primary amino group is preferably introduced to the polymerization initiating terminal or the polymerization terminating terminal, in that the disappearance of energy at a polymer terminal is inhibited to improve hysteresis loss characteristics.

Further, the content of the alkoxysilyl group bonded to the polymer chain of the (co)polymer rubber is preferably from 0.5 to 200 mmol/kg of styrene-butadiene rubber. The content is more preferably from 1 to 100 mmol/kg of styrene-butadiene rubber, and particularly preferably from 2 to 50 mmol/kg of styrene-butadiene rubber.

The alkoxysilyl group may be bonded to any of the polymerization initiating terminal, the polymerization terminating terminal, the main chain of the (co)polymer and the side chain, as long as it is bonded to the (co)polymer chain. However, the alkoxysilyl group is preferably introduced to the polymerization initiating terminal or the polymerization terminating terminal, in that the disappearance of energy is inhibited from the (co)polymer terminal to be able to improve hysteresis loss characteristics.

The styrene-butadiene rubber can be produced by polymerizing styrene and butadiene in a hydrocarbon solvent by anionic polymerization using an organic alkali metal and/or an organic alkali earth metal as an initiator, adding a terminating agent compound having a primary amino group protected with a protective group and an alkoxysilyl group to react it with a living polymer chain terminal at the time when the polymerization has substantially completed, and then conducting deblocking, for example, by hydrolysis or other appropriate procedure. In one embodiment, the styrene-butadiene rubber can be produced as disclosed in US-B- 7,342,070.

In one embodiment, and as taught in US-B- 7,342,070, the styrene-butadiene rubber is of the formula (I) or (II) 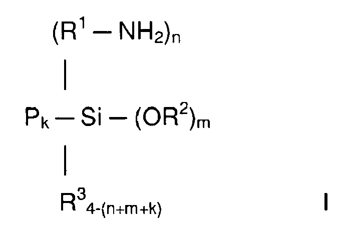 wherein P is a (co)polymer chain of a conjugated diolefin or a conjugated diolefin and an aromatic vinyl compound, R¹ is an alkylene group having 1 to 12 carbon atoms, R² and R³ are each independently an alkyl group having 1 to 20 carbon atoms, an allyl group or an aryl group, n is an integer of 1 or 2, m is an integer of 1 or 2, and k is an integer of 1 or 2, with the proviso that n+m+k is an integer of 3 or 4, 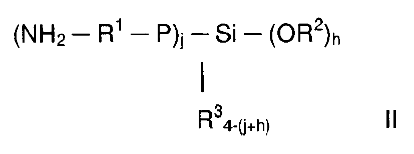 wherein P, R¹, R² and R³ have the same definitions as give for the above-mentioned formula I, j is an integer of 1 to 3, and h is an integer of 1 to 3, with the provision that j+h is an integer of 2 to 4.

The terminating agent compound having a protected primary amino group and an alkoxysilyl group may be any of various compounds as are known in the art. In one embodiment, the compound having a protected primary amino group and an alkoxysilyl group may include, for example, N,N-bis(trimethylsilyl)aminopropylmethyldimethoxysilane, 1-trimethylsilyl-2,2-dimethoxy-1-aza-2-silacyclopentane, N,N-bis(trimethylsilyl)aminopropyltrimethoxysilane, N,N-bis(trimethylsilyl)aminopropyltriethoxysilane, N,N-bis(trimethylsilyl)aminopropylmethyldiethoxysilane, N,N-bis(trimethylsilyl)aminoethyltrimethoxysilane, N,N-bis(trimethylsilyl)-aminoethyltriethoxysilne, N,N-bis(trimethylsilyl)aminoethylmethyldimethoxysilane, N,N-bis(trimethylsilyl)aminoethylmethyldiethoxysilane, etc., and preferred are 1-trimethylsilyl-2,2-dimethoxy-1-aza-2-silacyclopentane, N,N-bis(trimethylsilyl) aminopropylmethyldimethoxysilane and N,N-bis(trimethylsilyl)aminopropylmethyldiethoxysilane. In one embodiment, the compound having a protected primary amino group and an alkoxysilyl group is N,N-bis(trimethylsilyl)aminopropyltriethoxysilane.

In one embodiment, the compound having a protected primary amino group and an alkoxysilyl group may be any compound of formula III

RN-(CH₂)_{X}Si(OR^{'})₃, III

wherein R in combination with the nitrogen (N) atom is a protected amine group which upon appropriate post-treatment yields a primary amine, R^{'} represents a group having 1 to 18 carbon atoms selected from an alkyl, a cycloalkyl, an allyl, or an aryl; and X is an integer from 1 to 20. In one embodiment, at least one R^{'} group is an ethyl radical. By appropriate post-treatment to yield a primary amine, it is meant that subsequent to reaction of the living polymer with the compound having a protected primary amino group and an alkoxysilyl group, the protecting groups are removed. For example, in the case of bis(trialkylsilyl) protecting group as in N,N-bis(trimethylsilyl)aminopropyltriethoxysilane, hydrolysis is used to remove the trialkylsilyl groups and leave the primary amine.

Suitable solution polymerized styrene-butadiene rubber is available commercially as HPR355H from JSR.

A reference to glass transition temperature, or Tg, of an elastomer or elastomer composition, where referred to herein, represents the glass transition temperature(s) of the respective elastomer or elastomer composition in its uncured state or possibly a cured state in a case of an elastomer composition. A Tg can be suitably determined as a peak midpoint by a differential scanning calorimeter (DSC) at a temperature rate of increase of 10ºC per minute.

The rubber composition may also include from 10 to 60 phr of processing oil. Processing oil may be included in the rubber composition as extending oil typically used to extend elastomers. Processing oil may also be included in the rubber composition by addition of the oil directly during rubber compounding. The processing oil used may include both extending oil present in the elastomers, and process oil added during compounding. In one embodiment, the rubber composition includes a low PCA oil. Suitable low PCA oils include but are not limited to mild extraction solvates (MES), treated distillate aromatic extracts (TDAE), residual aromatic extract (RAE), SRAE, and heavy napthenic oils as are known in the art; see for example US-B- 5,504,135; US-B- 6,103,808; US-B- 6,399,697; US-B-6,410,816; US-B- 6,248,929; US-B- 6,146,520; US-A- 2001/00023307; US-A-2002/0000280; US-A- 2002/0045697; US-A- 2001/0007049; EP-A- 0839891; JP-A-2002097369 and ES-A- 2122917.

Suitable low PCA oils include those having a polycyclic aromatic content of less than 3 percent by weight as determined by the IP346 method. Procedures for the IP346 method may be found in Standard Methods for Analysis & Testing of Petroleum and Related Products and British Standard 2000 Parts, 2003, 62nd edition, published by the Institute of Petroleum, United Kingdom.

Resins may be used in the rubber composition and are generally present in an amount ranging from 1 to 20 phr, with a range of from 5 to 20 phr being preferred. Suitable resins include alphamethyl styrene resins, coumarone type resins, including coumarone-indene resins and mixtures of coumarone resins, naphthenic oils, phenol resins, and rosins. Other suitable resins include phenolterpene resins such as phenol-acetylene resins, phenol-formaldehyde resins, terpene-phenol resins, polyterpene resins, and xylene-formaldehyde resins. Further suitable resins include petroleum hydrocarbon resins such as synthetic polyterpene resins; aromatic hydrocarbon resins; resins resulting from the polymerization of styrene and alphamethyl styrene; aliphatic hydrocarbon resins; aliphatic cyclic hydrocarbon resins, such as dicyclopentadiene resins; aliphatic aromatic petroleum resins; hydrogenated hydrocarbon resins; hydrocarbon tackified resins; aliphatic alicyclic petroleum resins; rosin derivatives; and terpene resins. In one embodiment, the resin is selected from hydrocarbon resins synthesized by cationic polymerization of styrene and alphamethyl styrene, and coumarone-indene resins.

The vulcanizable rubber composition may include from 60 to 100 phr of a high structure silica.

The rubber composition includes a high structure silica. By high structure, it is meant that the silica has a relatively high specific surface area. Suitable high structure silica may be produced following the methods of US-A- 2005/0032965. The characterization of the high structure silica is as described in paragraphs [0055] to [0185] of US-A- 2005/0032965 which are incorporated by reference into this specification.

As disclosed in US-A- 2005/0032965, paragraphs [0055] to [0185]:
In the description of the high structure silica, the BET specific surface area is determined using the Brunauer-Emmet-Teller method described in "The Journal of the American Chemical Society," Vol. 60, page 309, February 1938 and corresponding to the International Standard ISO 5794/1 (Appendix D).

The CTAB specific surface area is the external surface area determined according to the NF T 45007 (November 1987) (5.12) standard.

The DOP oil uptake is determined according to the NF T 30-022 (March 1953) standard using dioctyl phthalate.

The pH is measured according to the ISO 787/9 standard (the pH of a 5% suspension in water).

The XDC particle size analysis method, using centrifugal sedimentation, by which, on the one hand, the size distribution widths of high structure silica objects and, on the other hand, the XDC mode illustrating its size of objects were measured, is described below.

The high structure silica according to the invention are preferably prepared by the preparation process according to US-A- 2005/0032965.

The rubber composition is generally devoid of carbon black as a reinforcing agent; reinforcement of the rubber composition is obtained through the use of silica. However, some carbon black may be present due to impurities in various additives or from residue present in equipment used in processing of the rubber composition. Small amounts of carbon black may also be introduced to the rubber composition as a carrier for an additive; for example, silane coupling agents may be added as a composite of coupling agent on a carbon black carrier. In one embodiment, the rubber composition contains no more than 2 phr of carbon black. In one embodiment, the rubber composition contains no more than 1 phr of carbon black.

The vulcanizable rubber composition may include from 1 to 20 phr of crosslinked particulate polymer gel, ultra high molecular weight polyethylene (UHMWPE) or plasticized starch.

Other fillers may be used in the rubber composition including, but not limited to, particulate fillers including ultra high molecular weight polyethylene (UHMWPE), particulate polymer gels including but not limited to those disclosed in US-B-6,242,534; US-B- 6,207,757; US-B- 6,133,364; US-B- 6,372,857; US-B- 5,395,891; or US-B- 6,127,488, and plasticized starch composite filler including but not limited to that disclosed in US-A- 5,672,639.

In one embodiment the rubber composition for use in the tire tread may contain a conventional sulfur containing organosilicon compound. Examples of suitable sulfur containing organosilicon compounds are of the formula:

Z-Alk-Sₙ-Alk-Z I

in which Z is selected from the group consisting of 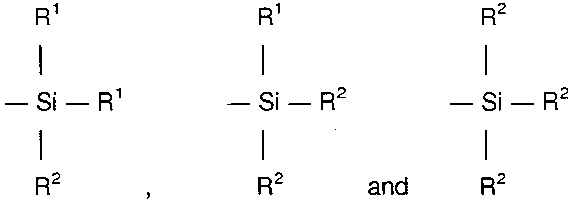 where R¹ is an alkyl group of 1 to 4 carbon atoms, cyclohexyl or phenyl; R² is alkoxy of 1 to 8 carbon atoms, or cycloalkoxy of 5 to 8 carbon atoms; Alk is a divalent hydrocarbon of 1 to 18 carbon atoms and n is an integer of 2 to 8.

In one embodiment, the sulfur containing organosilicon compounds are the 3,3'-bis(trimethoxy or triethoxy silylpropyl) sulfides. In one embodiment, the sulfur containing organosilicon compounds are 3,3'-bis(triethoxysilylpropyl) disulfide and 3,3'-bis(triethoxysilylpropyl) tetrasulfide. Therefore, as to formula I, Z may be 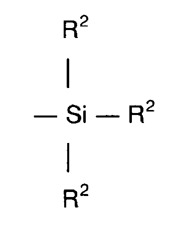 where R² is an alkoxy of 2 to 4 carbon atoms, alternatively 2 carbon atoms; alk is a divalent hydrocarbon of 2 to 4 carbon atoms, alternatively with 3 carbon atoms; and n is an integer of from 2 to 5, alternatively 2 or 4.

In another embodiment, suitable sulfur containing organosilicon compounds include compounds disclosed in US-B- 6,608,125. As disclosed in US-B- 6,608,125, these sulfur containing organosilicon compounds are of the formula G—C(==O)—S—CH₂CH₂CH₂SiX₃ wherein each X is an independently selected RO— group wherein each R is independently selected from the group consisting of hydrogen, alkyl that may or may not contain unsaturation, alkenyl groups, aryl groups, and aralkyl groups, such moieties other than hydrogen having from 1 to 18 carbon atoms, and G is a monovalent alkyl of from 6 to 8 carbon atoms. In one embodiment, the sulfur containing organosilicon compounds includes 3-(octanoylthio)-1-propyltriethoxysilane, CH₃(CH₂)₆C(=O) — S—CH₂CH₂CH₂Si(OCH₂CH₃)₃, which is available commercially as NXT™ from GE Silicones.

In another embodiment, suitable sulfur containing organosilicon compounds include those disclosed in US-A- 2003/0130535. As disclosed in US-A-2003/0130535, these sulfur containing organosilicon compounds are of the formulas II or III 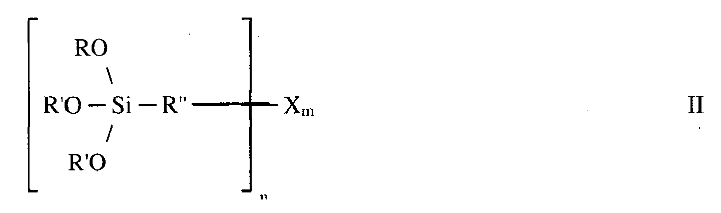 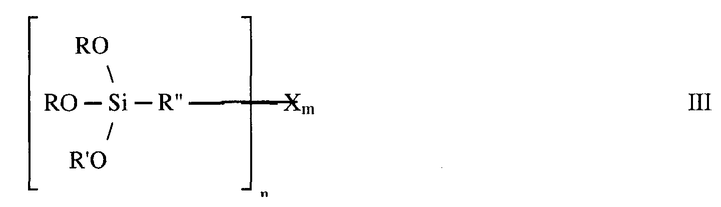 wherein: R is a methyl or ethyl group;
R' is identical or different and is a C₉C₃₀ branched or unbranched monovalent alkyl or alkenyl group, aryl group, aralkyl group, branched or unbranched C₂-C₃₀ alkyl ether group, branched or unbranched C₂-C₃₀ alkyl polyether group or R'''₃Si, where R‴ is C₁-C₃₀ branched or unbranched alkyl or alkenyl group, aralkyl group or aryl group, R" is a branched or unbranched, saturated or unsaturated, aliphatic, aromatic or mixed aliphatic/aromatic divalent C₁-C₃₀ hydrocarbon group;
X is SH where n=1 and m=1, S where n=2 and m=1-10 and mixtures thereof, S(C==O)—R''' where n=1 and m=1 or H where n=1 and m=1;
R" may mean CH₂, CH₂CH₂, CH₂CH₂CH₂, CH₂CH₂CH₂CH₂, CH(CH₃), CH₂CH(CH₃), C(CH₃)₂, CH(C₂H₅), CH₂CH₂CH(CH₃), CH₂CH(CH₃)CH₂ or

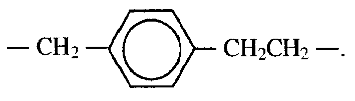

In one embodiment, the sulfur containing organosilicon compound is of formula II, R is ethyl, R' is C₁₂—C₁₄ alkyl, R" is CH₂CH₂CH₂, X is SH, n is 1 and m is 1. In one embodiment, the sulfur containing organosilicon compound is Si-363 from Degussa.

In one embodiment, the sulfur containing organosilicon compound is a combination of 3, 3'-bis(triethoxypropylsilyl) tetrasulfide and 3-(octanoylthio)-1-propyltriethoxysilane.

The amount of the sulfur containing organosilicon compound in a rubber composition will vary depending on the level of other additives that are used. Generally speaking, the amount of the compound will range from 0.5 to 20 phr. In one embodiment, the amount will range from 1 to 10 phr.

It is readily understood by those having skill in the art that the rubber composition would be compounded by methods generally known in the rubber compounding art, such as mixing the various sulfur-vulcanizable constituent rubbers with various commonly used additive materials such as, for example, sulfur donors, curing aids, such as activators and retarders and processing additives, such as oils, resins including tackifying resins and plasticizers, fillers, pigments, fatty acid, zinc oxide, waxes, antioxidants and antiozonants and peptizing agents. As known to those skilled in the art, depending on the intended use of the sulfur vulcanizable and sulfur-vulcanized material (rubbers), the additives mentioned above are selected and commonly used in conventional amounts. Representative examples of sulfur donors include elemental sulfur (free sulfur), an amine disulfide, polymeric polysulfide and sulfur olefin adducts. In one embodiment, the sulfur-vulcanizing agent is elemental sulfur. The sulfur-vulcanizing agent may be used in an amount ranging from 0.5 to 8 phr. Typical amounts of tackifier resins, if used, comprise 0.5 to 10 phr. Typical amounts of processing aids comprise 1 to 50 phr. Typical amounts of antioxidants comprise 1 to 5 phr. Representative antioxidants may be, for example, diphenyl-p-phenylenediamine and others, such as, for example, those disclosed in The Vanderbilt Rubber Handbook (1978), pages 344 through 346.

Typical amounts of antiozonants comprise 1 to 5 phr. Typical amounts of fatty acids, if used, which can include stearic acid comprise 0.5 to 3 phr. Typical amounts of zinc oxide comprise 1 to 5 phr. Typical amounts of waxes comprise 1 to 5 phr. Often microcrystalline waxes are used. Typical amounts of peptizers comprise 0.1 to 1 phr. Typical peptizers may be, for example, pentachlorothiophenol and dibenzamidodiphenyl disulfide.

Accelerators are used to control the time and/or temperature required for vulcanization and to improve the properties of the vulcanizate. In one embodiment, a single accelerator system may be used, i.e., primary accelerator. The primary accelerator(s) may be used in total amounts ranging from 0.5 to 4. In another embodiment, combinations of a primary and a secondary accelerator might be used with the secondary accelerator being used in smaller amounts, such as from 0.05 to 3 phr, in order to activate and to improve the properties of the vulcanizate. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are amines, disulfides, guanidines, thioureas, thiazoles, thiurams, sulfenamides, dithiocarbamates and xanthates. In one embodiment, the primary accelerator is a sulfenamide. If a second accelerator is used, the secondary accelerator may be a guanidine, dithiocarbamate or thiuram compound.

The mixing of the rubber composition can be accomplished by methods known to those having skill in the rubber mixing art. For example, the ingredients are typically mixed in at least two stages, namely, at least one non-productive stage followed by a productive mix stage. The final curatives including sulfur-vulcanizing agents are typically mixed in the final stage which is conventionally called the "productive" mix stage in which the mixing typically occurs at a temperature, or ultimate temperature, lower than the mix temperature(s) than the preceding non-productive mix stage(s). The rubber composition may be subjected to a thermomechanical mixing step. The thermomechanical mixing step generally comprises a mechanical working in a mixer or extruder for a period of time suitable in order to produce a rubber temperature between 140°C and 190°C. The appropriate duration of the thermomechanical working varies as a function of the operating conditions, and the volume and nature of the components. For example, the thermomechanical working may be from 1 to 20 minutes.

The rubber composition may be incorporated in a variety of rubber components of the tire. For example, the rubber component may be a tread (including tread cap and tread base), sidewall, apex, chafer, sidewall insert, wirecoat or innerliner. In one embodiment, the compound is a tread.

The pneumatic tire of the present invention may be a race tire, passenger tire, aircraft tire, agricultural, earthmover, off-the-road or truck tire. In one embodiment, the tire is a passenger or truck tire. The tire may also be a radial or bias.

Vulcanization of the pneumatic tire of the present invention is generally carried out at conventional temperatures ranging from 100°C to 200°C. Any of the usual vulcanization processes may be used such as heating in a press or mold, heating with superheated steam or hot air. Such tires can be built, shaped, molded and cured by various methods which are known and will be readily apparent to those having skill in such art.

The following examples are presented for the purposes of illustrating the present invention. All parts are parts by weight unless specifically identified otherwise.

### Example 1

In this example, two rubber compounds are compared. Sample 1 represents a control sample. Sample 2 is representative of the present invention.

The elastomers were compounded in a multi-stage mix procedure with standard amounts of conventional curatives and processing aids as indicated in Table 1 (all amounts in phr), and cured with a standard cure cycle. Cured samples were evaluated for various physical properties following standard tests protocols as indicated in Table 2. Tires having tread made from compounds of samples 1 and 2 were tested for various performance criteria as shown in Table 3 (values normalized to the control = 100).

**Table 1**

| | Inventive | Control |
|---|---|---|
| Sample | 1 | 2 |
| Non-Productive Mix Steps | | |
| Polybutadiene¹ | 30 | 30 |
| SSBR² | 70 | 70 |
| Oil³ | 15 | 5 |
| Silica⁴ | 80 | 86 |
| Carbon black | 0 | 6 |
| alphamethyl styrene resin | 10 | 5 |
| Coupling agent⁵ | 7.0 | 6.8 |
| Waxes⁶ | 1.0 | 1.0 |
| Stearic acid | 3.0 | 3.0 |
| Antidegradant⁷ | 2.5 | 2.5 |

| Productive Mix Step | | |
|---|---|---|
| Antidegradant⁷ | 0.5 | 0.5 |
| Zinc oxide | 2.5 | 1.5 |
| Sulfur | 1.4 | 1.6 |
| Accelerators⁸ | 5.5 | 4.4 |
| Coupling agent⁹ | 2.0 | 2.0 |

| | | |
|---|---|---|
| ¹ Buna CB25, a solution high-cis polybutadiene polymer produced with neodymium catalyst from Lanxess. ² HPR355H from JSR, a functionalized solution polymerized copolymer of butadiene and styrene, having 27% bound styrene and 57% vinyl (BD), Tg (on-set) of -27 °C and a Mooney viscosity of 65 (100 °C). ³TDAE oil. ⁴ Zeosil ® Premium 200 MP, synthetic, hydrated, amorphous, precipitated, high aggregate size HDS silica with a surface area of 210 m2/g, from Rhodia. ⁵ Bifunctional organosilane (Bis(triethoxysilylpropyl)disulfan). ⁶ Microcrystalline and paraffinic. ⁷ p-phenylenediamine type. ⁸ Sulfenamide and guanidine type. ⁹ 50 percent by weight bis(triethoxypropylsilyl)tetrasulfide on carbon black; the rubber composition contained therefore 1 phr of carbon black. | | |

**Table 2**

| | Inventive | Control |
|---|---|---|
| Sample | 1 | 2 |
| Physical Properties | | |
| Shore A | 64 | 64 |
| Rebound 23 °C | 37 | 33 |
| Rebound 100 °C | 67 | 62 |
| Elongation, % | 571 | 526 |
| True Tensile, MPa | 113 | 114 |
| Modulus, 300 % | 7.9 | 9.6 |
| Tensile Strength, MPa | 16.8 | 18.2 |

**Table 3**

| | Tire Performance | Control |
|---|---|---|
| Sample | 1 | 2 |
| Rolling Resistance | 108 | 100 |
| Wet Braking | 92 | 100 |
| Dry Handling | 104 | 100 |
| Dry Braking | 96 | 100 |

As can be seen from Table 3, the tire having the tread using a compound according to the present invention shows improved rolling resistance and wet performance, with no compromise in dry handling as compared with the control.

## Claims

1. A rubber composition comprising, expressed as parts by weight per 100 parts by weight of elastomer (phr),
(A) 10 to 40 phr of a polybutadiene rubber having a microstructure comprising 96 to 98 percent cis 1,4-isomeric units, 1 to 3 percent trans 1,4-isomeric units and 0.3 to 1 percent vinyl 1,2-content;
(B) 60 to 90 phr of a solution polymerized styrene-butadiene rubber functionalized with an alkoxysilane group and a primary amine group, represented by the formula (1) or (2) 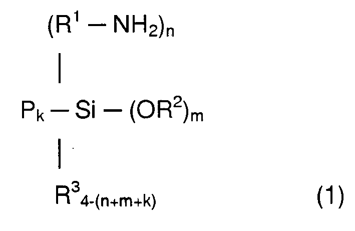 wherein P is a polymer or copolymer chain of a conjugated diolefin or a conjugated diolefin and an aromatic vinyl compound, R¹ is an alkylene group having from 1 to 12 carbon atoms, R² and R³ are each independently an alkyl group having from 1 to 20 carbon atoms, an allyl group or an aryl group, n is an integer of 1 or 2, m is an integer of 1 or 2, and k is an integer of 1 or 2, with the proviso that n+m+k is an integer of 3 or 4, 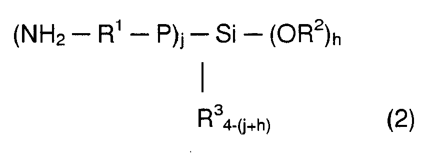 wherein P, R¹, R² and R³ have the same definitions as given for the above-mentioned formula (1), j is an integer of from 1 to 3, and h is an integer of from 1 to 3, with the provision that j+h is an integer of 2 to 4;
(C) 60 to 100 phr of silica having a CTAB specific surface area (S_{CTAB}) of between 40 and 525 m²/g as determined according to the NF T 45007 standard and a BET specific surface area (S_{BET}) of between 45 and 550 m²/g as determined according to the ISO 5794/1 standard; and
(D) no more than 2 phr of carbon black.

2. The rubber composition of claim 1, wherein the polybutadiene rubber has a number average molecular weight (Mn) in a range of from 230,000 to 250,000 with a heterogeneity index (Mw/Mn) in a range of from 1.5/1 to 2/1, and/or wherein the polybutadiene rubber has a Tg in a range of from -104°C to -109°C.

3. The rubber composition of claim 1 or 2, wherein the silica has a BET specific surface area (S_{BET}) between 120 and 280 m²/g or between 150 and 280 m²/g.

4. The rubber composition of claim 3, wherein the silica has a BET specific surface area (S_{BET}) between 200 and 260 m²/g.

5. The rubber composition of at least one of the previous claims, wherein the amount of carbon black is no more than 1 phr.

6. The rubber composition of at least one of the previous claims, wherein the rubber composition further comprises a PCA process oil having a polycyclic aromatic content of less than 3 percent by weight as determined by the IP346 method, wherein the PCA oil is selected from mild extraction solvates (MES), treated distillate aromatic extracts (TDAE), or heavy napthenic oils.

7. The rubber composition of claim 6, wherein the PCA oil comprises a mild extraction solvates (MES) or treated distillate aromatic extracts (TDAE).

8. The rubber composition of at least one of the previous claims, wherein the rubber composition further comprises a sulfur containing organosilicon compound of the formula:
Z-Alk-Sₙ-Alk-Z l
in which Z is selected from the group consisting of 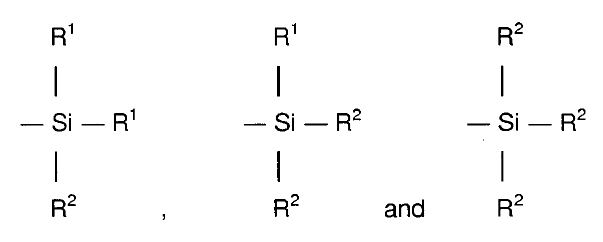 where R¹ is an alkyl group of from 1 to 4 carbon atoms, cyclohexyl or phenyl; R² is alkoxy of from 1 to 8 carbon atoms, or cycloalkoxy of from 5 to 8 carbon atoms; Alk is a divalent hydrocarbon of from 1 to 18 carbon atoms and n is an integer of from 2 to 8.

9. The rubber composition of claim 9, wherein the sulfur containing organosilicon compound comprises at least one of 3,3'-bis(triethoxysilylpropyl) disulfide or 3,3'-bis(triethoxysilylpropyl) tetrasulfide.

10. The rubber composition of at least one of the previous claims, wherein the rubber composition further comprises a sulfur containing organosilicon compound comprising a compound of the formula G-C(=O)-S-CH₂CH₂CH₂SiX₃ wherein each X is an independently selected RO- group wherein each R is independently selected from the group consisting of hydrogen, alkyl that may or may not contain unsaturation, alkenyl groups, aryl groups, and aralkyl groups, such moieties other than hydrogen having from 1 to 18 carbon atoms, and G is a monovalent alkyl of from 6 to 8 carbon atoms.

11. The rubber composition of claim 10, wherein the sulfur containing organosilicon compound comprises 3-(octanoylthio)-1-propyltriethoxysilane.

12. The rubber composition of at least one of the previous claims, wherein the rubber composition comprises a resin selected from alphamethyl styrene resin and coumarone-indene resin.

13. The rubber composition of at least one of the previous claims, wherein the sulfur containing organosilicon compound comprises at least one compound of formula II or III 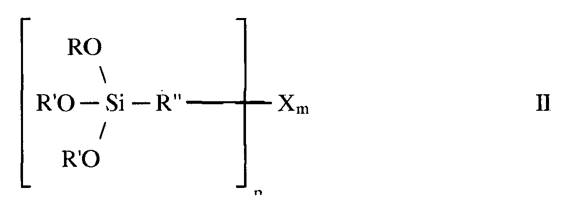 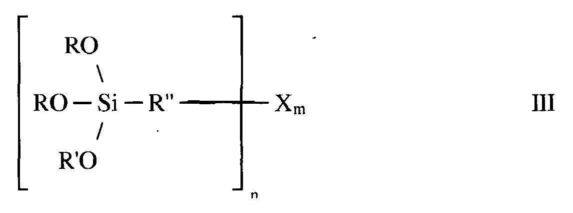 wherein R is a methyl or ethyl group;
R' is identical or different and is a C₉-C₃₀ branched or unbranched monovalent alkyl or alkenyl group, aryl group, aralkyl group, branched or unbranched C₂-C₃₀ alkyl ether group, branched or unbranched C₂-C₃₀ alkyl polyether group or R"'₃Si, where R'" is C₁-C₃₀ branched or unbranched alkyl or alkenyl group, aralkyl group or aryl group, R" is a branched or unbranched, saturated or unsaturated, aliphatic, aromatic or mixed aliphatic/aromatic divalent C₁-C₃₀ hydrocarbon group;
X is SH where n=1 and m=1, S where n=2 and m=1-10 and mixtures thereof, S(C==O) -R"' where n=1 and m=1 or H where n=1 and m=1;
R" may mean CH₂, CH₂CH₂, CH₂CH₂CH₂, CH₂CH₂CH₂CH₂, CH(CH₃), CH₂CH(CH₃), C(CH₃)₂, CH(C₂H₅), CH₂CH₂CH(CH₃), CH₂CH(CH₃)CH₂ or

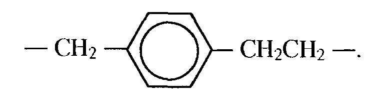

14. The rubber composition of claim 13, wherein the sulfur containing organosilicon compound comprises a compound of formula II wherein R is ethyl, R' is C₁₂-C₁₄ alkyl, R" is CH₂CH₂CH₂, X is SH, n is 1 and m is 1.

15. A pneumatic tire having a tread, the tread comprising a rubber composition in accordance with at least one of the previous claims.

## Patentansprüche

1. Kautschukzusammensetzung, umfassend, ausgedrückt als Gewichtsteile je 100 Gewichtsteile Elastomer (ThK),
(A) 10 bis 40 ThK eines Polybutadienkautschuks mit einer Mikrostruktur, umfassend 96 bis 98 Prozent cis-1,4-Isomereinheiten, 1 bis 3 Prozent trans-1,4-Isomereinheiten und 0,3 bis 1 Prozent Vinyl-1,2-Gehalt;
(B) 60 bis 90 ThK eines lösungspolymerisierten Styrol-Butadien-Kautschuks, funktionalisiert mit einer Alkoxysilangruppe und einer primären Amingruppe, dargestellt durch die Formel (1) oder (2) 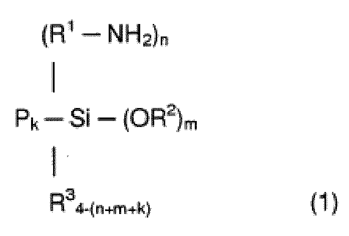 wobei P eine Polymer- oder Copolymerkette eines konjugierten Diolefins oder eines konjugierten Diolefins und einer aromatischen Vinylverbindung ist, R¹ eine Alkylengruppe mit 1 bis 12 Kohlenstoffatomen ist, R² und R³ jedes unabhängig eine Alkylgruppe mit 1 bis 20 Kohlenstoffatomen, eine Allylgruppe oder eine Arylgruppe sind, n eine ganze Zahl von 1 oder 2 ist, m eine ganze Zahl von 1 oder 2 ist, und k eine ganze Zahl von 1 oder 2 ist, mit dem Vorbehalt, dass n+m+k eine ganze Zahl von 3 oder 4 ist, 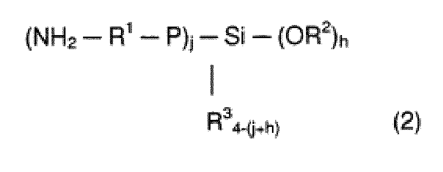 wobei P, R¹, R² und R³ die gleichen Definitionen aufweisen, wie für die obenerwähnte Formel (1) angeführt, j eine ganze Zahl von 1 bis 3 ist, und h eine ganze Zahl von 1 bis 3 ist, mit dem Vorbehalt, dass j+h eine ganze Zahl von 2 bis 4 ist;
(C) 60 bis 100 ThK Silika mit einer spezifischen Oberfläche nach CTAB (S_{CTAB}) von zwischen 40 und 525 m²/g, ermittelt gemäß der Norm NF T 45007, und einer spezifischen Oberfläche nach BET (S_{BET}) von zwischen 45 und 550 m²/g, ermittelt gemäß der Norm ISO 5794/1; und
(D) nicht mehr als 2 ThK Carbon Black.

2. Kautschukzusammensetzung nach Anspruch 1, wobei der Polybutadienkautschuk eine zahlenmittlere Molmasse (Mn) in einem Bereich von 230.000 bis 250.000 bei einem Heterogenitätsindex (Mw/Mn) in einem Bereich von 1,5:1 bis 2:1 aufweist, und/oder wobei der Polybutadienkautschuk eine Tg in einem Bereich von -104°C bis -109°C aufweist.

3. Kautschukzusammensetzung nach Anspruch 1 oder 2, wobei das Silika eine spezifische Oberfläche nach BET (S_{BET}) zwischen 120 und 280 m²/g oder zwischen 150 und 280 m²/g aufweist.

4. Kautschukzusammensetzung nach Anspruch 3, wobei das Silika eine spezifische Oberfläche nach BET (S_{BET}) zwischen 200 und 260 m²/g aufweist.

5. Kautschukzusammensetzung nach mindestens einem der vorgenannten Ansprüche, wobei die Carbon Black-Menge nicht mehr als 1 ThK beträgt.

6. Kautschukzusammensetzung nach mindestens einem der vorgenannten Ansprüche, wobei die Kautschukzusammensetzung weiter ein PCA-Prozessöl mit einem Gehalt an polyzyklischen Aromaten von weniger als 3 Gewichtsprozent, ermittelt durch das IP346-Verfahren, aufweist, wobei das PCA-Öl aus milden Extraktionslösungsmitteln (MES), behandelten Aromatenextrakten aus behandeltem Destillat (TDAE) oder schweren naphthenischen Ölen ausgewählt ist.

7. Kautschukzusammensetzung nach Anspruch 6, wobei das PCA-Öl ein mildes Extraktionslösungsmittel (MES) oder behandelte Aromatenextrakte aus behandeltem Destillat (TDAE) umfasst.

8. Kautschukzusammensetzung nach mindestens einem der vorgenannten Ansprüche, wobei die Kautschukzusammensetzung weiter eine schwefelhaltige Organosiliziumverbindung umfasst mit der Formel:
**Z - Alk - Sn - Alk - Z** I
wobei Z aus der Gruppe ausgewählt ist, bestehend aus 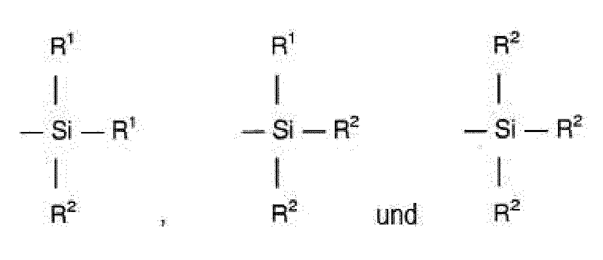 wobei R¹ eine Alkylgruppe von 1 bis 4 Kohlenstoffatomen, Cyclohexyl oder Phenyl ist; R² Alkoxy von 1 bis 8 Kohlenstoffatomen oder Cycloalkoxy von 5 bis 8 Kohlenstoffatomen ist; Alk ein zweiwertiger Kohlenwasserstoff von 1 bis 18 Kohlenstoffatomen ist und n eine ganze Zahl von 2 bis 8 ist.

9. Kautschukzusammensetzung nach Anspruch 9, wobei die schwefelhaltige Organosiliziumverbindung mindestens eines von 3,3'-Bis(triethoxysilylpropyl)disulfid oder 3,3'-Bis(triethoxysilylpropyl)tetrasulfid umfasst.

10. Kautschukzusammensetzung nach mindestens einem der vorgenannten Ansprüche, wobei die Kautschukzusammensetzung weiter eine schwefelhaltige Organosiliziumverbindung umfasst, umfassend eine Verbindung mit der Formel G-C(=O)-S-CH₂CH₂CH₂SiX₃, wobei jedes X eine unabhängig ausgewählte RO-Gruppe ist, wobei jedes R unabhängig aus der Gruppe ausgewählt ist, bestehend aus Wasserstoff, Alkyl, das Ungesättigtheit enthalten kann oder nicht, Alkenylgruppen, Arylgruppen, und Aralkylgruppen, anderen Anteilen als Wasserstoff, die 1 bis 18 Kohlenstoffatome aufweisen, und G ein einwertiges Alkyl von 6 bis 8 Kohlenstoffatomen ist.

11. Kautschukzusammensetzung nach Anspruch 10, wobei die schwefelhaltige Organosiliziumverbindung 3-(Octanoylthio)-1-propyltriethoxysilan umfasst.

12. Kautschukzusammensetzung nach mindestens einem der vorgenannten Ansprüche, wobei die Kautschukzusammensetzung ein aus Alphamethylstyrolharz und Coumaron-Inden-Harz ausgewähltes Harz umfasst.

13. Kautschukzusammensetzung nach mindestens einem der vorgenannten Ansprüche, wobei die schwefelhaltige Organosiliziumverbindung mindestens eine Verbindung der Formel II oder III umfasst 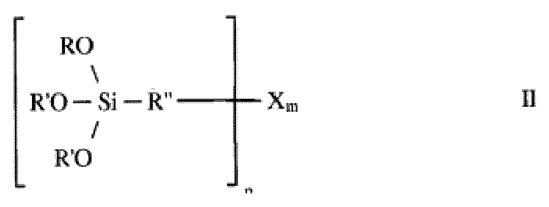 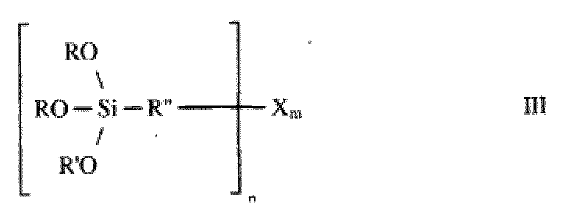 wobei R eine Methyl- oder Ethylgruppe ist;
R' identisch oder verschieden ist und eine verzweigte oder unverzweigte einwertige C₉-C₃₀-Alkyl- oder Alkenylgruppe, Arylgruppe, Aralkylgruppe, verzweigte oder unverzweigte C₂-C₃₀-Alkylethergruppe, verzweigte oder unverzweigte C₂-C₃₀-Alkylpolyethergruppe oder R"'₃Si ist, wobei R'" C₁-C₃₀-verzweigte oder unverzweigte Alkyl- oder Alkenylgruppe, Aralkylgruppe oder Arylgruppe ist, R" eine verzweigte oder unverzweigte, gesättigte oder ungesättigte, aliphatische, aromatische oder gemischt aliphatisch/aromatische zweiwertige C₁-C₃₀-Kohlenwasserstoffgruppe ist;
X SH ist, wobei n=1 und m=1; S, wobei n=2 und m=1-10 und Mischungen davon, S(C==O) - R"', wobei n=1 und m=1 oder H, wobei n=1 und m=1;
R" CH₂, CH₂CH₂, CH₂CH₂CH₂, CH₂CH₂CH₂CH₂, CH(CH₃), CH₂CH(CH₃), C(CH₃)₂, CH(C₂ H₅), CH₂CH₂CH(CH₃), CH₂CH(CH₃)CH₂ oder 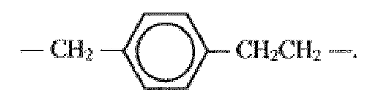 bedeuten kann.

14. Kautschukzusammensetzung nach Anspruch 13, wobei die schwefelhaltige Organosiliziumverbindung eine Verbindung der Formel II umfasst, wobei R Ethyl ist, R' C₁₂-C₁₄-Alkyl ist, R" CH₂CH₂CH₂ ist, X SH ist, n 1 ist und m 1 ist.

15. Luftreifen, umfassend eine Lauffläche, wobei die Lauffläche eine Kautschukzusammensetzung gemäß mindestens einem der vorgenannten Ansprüche umfasst.

## Revendications

1. Composition de caoutchouc comprenant, exprimées comme parties en poids par 100 parties en poids élastomère (phr) :
(A) de 10 à 40 phr de caoutchouc de polybutadiène possédant une microstructure comprenant de 96 à 98 % d'unités isomères 1,4-cis, de 1 à 3 % d'unités isomères 1,4-trans, et de 0,3 à 1 % d'une teneur en groupe 1,2-vinyle ;
(B) de 60 à 90 phr dans un caoutchouc de styrène-butadiène polymérisé en solution, fonctionnalisé avec un groupe alcoxysilane et un groupe d'amine primaire, répondant à la formule (1) ou (2) 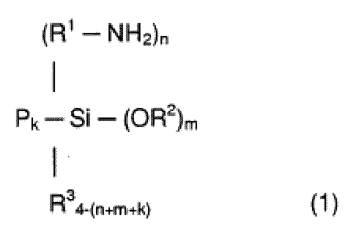 dans laquelle P représente une chaîne polymère ou copolymère d'une dioléfine conjuguée ou d'une dioléfine conjuguée et d'un composé vinylaromatique, R¹ représente un groupe alkylène contenant de 1 à 12 atomes de carbone, R² et R³ représentent, chacun de manière indépendante, un groupe alkyle contenant de 1 à 20 atomes de carbone, un groupe allyle ou un groupe aryle, n représente un entier égal à 1 ou 2, m représente un entier égal à 1 ou 2, et k représente un entier égal à 1 ou 2, avec cette réserve que la somme n+m+k représente un entier égal à 3 ou 4 ; 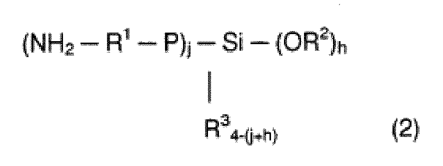 dans laquelle P, R¹, R² et R³ ont les mêmes définitions que celles données ci dessus pour la formule (1) susmentionnée, j représente un entier égal à 1 - 3 et h représente un entier égal à 1 - 3, avec cette réserve que la somme j+h représente un entier égal à 2 - 4 ;
(C) de 60 à 100 phr d'une silice possédant une aire de surface spécifique CTAB (S_{CTAB}) entre 40 et 525 m²/g comme déterminé conformément à la norme NFT 45007 et une aire de surface spécifique BET (S_{BET}) entre 45 et 550 m²/g comme déterminé conformément à la norme ISO 5794/1 ; et
(D) pas plus de 2 phr de noir de carbone.

2. Composition de caoutchouc selon la revendication 1, dans laquelle le caoutchouc de polybutadiène possède un poids moléculaire moyen en nombre (Mn) dans la plage de 230 000 à 250 000 avec un indice d'hétérogénéité (Mw/Mn) dans la plage de 1,5/1 à 2/1 et/ou dans laquelle le caoutchouc de polybutadiène possède une valeur Tg dans la plage de -104 °C à -109 °C.

3. Composition de caoutchouc selon la revendication 1 ou 2, dans laquelle la silice possède une aire de surface spécifique BET (S_{BET}) entre 120 et 280 m²/g ou entre 150 et 280 m²/g.

4. Composition de caoutchouc selon la revendication 3, dans laquelle la silice possède une aire de surface spécifique BET (S_{BET}) entre 200 et 260 m²/g.

5. Composition de caoutchouc selon au moins une des revendications précédentes, dans laquelle la quantité du noir de carbone n'est pas supérieure à 1 phr.

6. Composition de caoutchouc selon au moins une des revendications précédentes, dans laquelle la composition de caoutchouc comprend en outre une huile de mise en oeuvre de type PCA possédant une teneur en composés aromatiques polycycliques inférieure à 3 % en poids, comme déterminé par le procédé IP346, l'huile PCA étant choisie parmi des solvates d'extraction douce (MES), des extraits aromatiques de distillats traités (TDAE) ou des huiles naphténiques lourdes.

7. Composition de caoutchouc selon la revendication 6, dans laquelle l'huile PCA comprend des solvates d'extraction douce (MES) ou des extraits aromatiques de distillats traités (TDAE).

8. Composition de caoutchouc selon au moins une des revendications précédentes, dans laquelle la composition de caoutchouc comprend en outre un composé d'organosilicium contenant du soufre, répondant à la formule
**Z - Alk - Sₙ - Alk - Z** I
dans laquelle Z est choisi parmi le groupe constitué par : 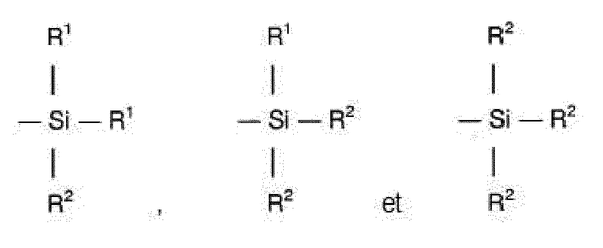 dans laquelle R¹ représente un groupe alkyle contenant de 1 à 4 atomes de carbone, un groupe cyclohexyle ou un groupe phényle ; R² représente un groupe alcoxy contenant de 1 à 8 atomes de carbone ou un groupe cycloalcoxy contenant de 5 à 8 atomes de carbone ; Alk représente un groupe d'hydrocarbure divalent de 1 à 18 atomes de carbone et n représente un entier de 2 à 8.

9. Composition de caoutchouc selon la revendication 9, dans laquelle le composé d'organosilicium contenant du soufre comprend au moins un membre choisi parmi le groupe comprenant le 3,3'-bis(triéthoxysilylpropyl) disulfure ou le 3,3'-bis(triéthoxysilylpropyl) tétrasulfure.

10. Composition de caoutchouc selon au moins une des revendications précédentes, dans laquelle la composition de caoutchouc comprend en outre un composé d'organosilicium contenant du soufre comprenant un composé répondant à la formule G-C(=O)-S-CH₂CH₂CH₂SiX₃ dans laquelle chaque X représente de manière indépendante un groupe RO- dans lequel chaque radical R est choisi de manière indépendante parmi le groupe constitué par un atome d'hydrogène, un groupe alkyle qui peut ou non contenir une insaturation, des groupes alcényle, des groupes aryle et des groupes aralkyle, des fractions autres qu'un atome d'hydrogène contenant de 1 à 18 atomes de carbone et G représente un groupe alkyle monovalent de 6 à 8 atomes de carbone.

11. Composition de caoutchouc selon la revendication 10, dans laquelle le composé d'organosilicium contenant de soufre comprend du 3-(octanoylthio)-1-propyltriéthoxysilane.

12. Composition de caoutchouc selon au moins une des revendications précédentes, dans laquelle la composition de caoutchouc comprend une résine choisie parmi le groupe comprenant une résine d'alphaméthyl-styrène et une résine de coumarone-indène.

13. Composition de caoutchouc selon au moins une des revendications précédentes, dans laquelle le composé d'organosilicium contenant du soufre comprend au moins un composé répondant à la formule II ou III : 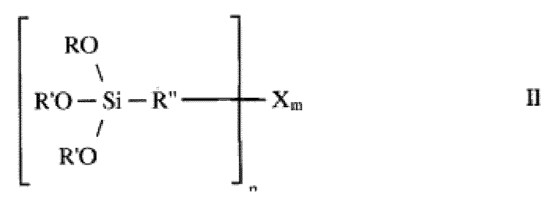 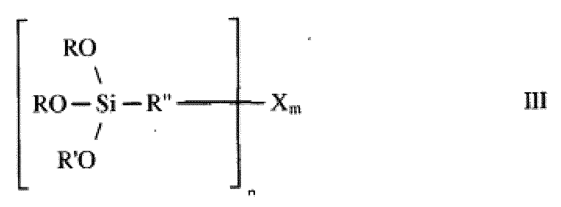 dans laquelle R représente un groupe méthyle ou un groupe éthyle ;
R' est identique ou différent et représente un groupe alcényle ou un groupe alkyle monovalent ramifié ou non ramifié en C₉-C₃₀, un groupe aryle, un groupe aralkyle, un groupe d'éther alkylique en C₂-C₃₀ ramifié ou non ramifié, un groupe alkylpolyéther en C₂-C₃₀ ramifié ou non ramifié ou un groupe R"'₃Si, dans lequel R"' représente un groupe alcényle ou un groupe alkyle ramifié ou non ramifié en C₁-C₃₀, un groupe aralkyle ou un groupe aryle, R" représente un groupe d'hydrocarbure divalent en C₁-C₃₀, aliphatique, aromatique ou aliphatique/aromatique mixte, saturé ou insaturé, ramifié ou non ramifié ;
X représente un groupe SH lorsque n = 1 et m = 1 ; un atome de soufre lorsque n = 2 et m = 1-10 et leurs mélanges, un groupe S(C==O)-R'" lorsque n = 1 et m = 1 ou un atome d'hydrogène lorsque n = 1 et m = 1 ;
R" peut représenter un groupe CH₂, un groupe CH₂CH₂, un groupe CH₂CH₂CH₂, un groupe CH₂CH₂CH₂CH₂, un groupe CH(CH₃), un groupe CH₂CH(CH₃), un groupe C(CH₃)₂, un groupe CH(C₂H₅), un groupe CH₂CH₂CH(CH₃), un groupe CH₂CH(CH₃)CH₂ ou un groupe

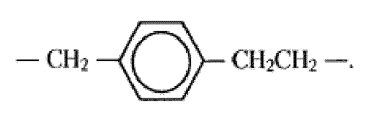

14. Composition de caoutchouc selon la revendication 13, dans laquelle le composé d'organosilicium contenant du soufre comprend un composé répondant à la formule II dans laquelle R représente un groupe éthyle, R' représente un groupe alkyle en C₁₂-C₁₄, R" représente un groupe CH₂CH₂CH₂, X représente un groupe SH, n est égal à 1 et m est égal à 1.

15. Bandage pneumatique possédant une bande de roulement, la bande de roulement comprenant une composition de caoutchouc selon au moins une des revendications précédentes.
